# EUROPÄISCHE PATENTSCHRIFT

(11) **EP 0 963 528 B1**
(45) Veröffentlichungstag und Bekanntmachung des Hinweises auf die Patenterteilung: **09.04.2003**
(21) Anmeldenummer: 98904037.3
(22) Anmeldetag: 07.01.1998
(51) Int. Cl.: F16N 13/02

(54) **PRESSE MIT DOSIERANLAGE**
PRESS FITTED WITH METERING DEVICE
PRESSE POURVUE D'UNE INSTALLATION DE DOSAGE

(30) Priorität: 13.02.1997 DE 19705461
(43) Veröffentlichungstag der Anmeldung: 15.12.1999
(73) Patentinhaber: Gebr. Schmidt Fabrik für Feinmechanik GmbH & Co. KG, 78112 St. Georgen (DE)
(72) Erfinder: BABIEL, Hartmut, D-78628 Rottweil (DE); ELSÄSSER, Thomas, D-78112 St. Georgen (DE); WEISSER, Erich, D-78112 St. Georgen (DE)
(74) Vertreter: Otten, Hajo, Dr.-Ing.
(86) Internationale Anmeldenummer: EP9800041
(87) Internationale Veröffentlichungsnummer: WO98036209

(56) Entgegenhaltungen:
- EP-A- 0 551 028
- DE-A- 19 507 055
- DE-B- 1 051 581
- FR-A- 1 390 421
- US-A- 2 557 822

## Beschreibung

Die vorliegende Erfindung betrifft ein Gerät mit einem über eine Antriebsvorrichtung betätigten Teil, vorzugsweise ein Handhabungsgerät mit einem betätigten Positionierteil oder eine Presse mit einem von der Antriebsvorrichtung betätigten Pressenstößel, wobei zur Schmierung zumindest der Antriebsvorrichtung eine Dosieranlage vorgesehen ist, die durch die Antriebsvorrichtung betätigbar ist.

Ein Gerät der vorstehend genannten Art ist aus dem Dokument DE 195 07 055 A1 bekannt.

Derartige Geräte dienen als Pressen z.B. einerseits zum Verformen von Gegenständen und andererseits zum Verfügen von Werkstücken, die unter Druck zusammengebaut werden müssen. Die insbesondere im Pressensektor eingesetzten Handhabungsgeräte werden z.B. dazu verwendet, die zu verfügenden Werkstücke unter der Presse zu positionieren.

Als Antriebsvorrichtung für derartige Geräte sind einerseits fluidbetätigte Kolben-Zylindereinheiten und andererseits Spindeltriebe bekannt, die über einen Elektromotor betätigt werden.

Insbesondere bei Pressen, die eine sehr hohe Anzahl von Pressenhüben während ihrer Einsatzdauer ausführen, ist es an sich erforderlich, die beweglichen Teile zu schmieren. Bei Spindeltrieben ist es z.B. bekannt, daß diese nach ca. 500.000 Hüben wegen Mangelschmierung ausfallen, wenn sie nicht laufend während des Betriebes geschmiert werden.

Bei derartigen Spindeltrieben, die entweder eine angetriebene, axial unverschiebliche Gewindespindel oder aber eine angetriebene, axial unverschiebliche Spindelmutter aufweisen, gestaltet sich die Schmierung des Gewindes zwischen Gewindespindel und Spindelmutter jedoch vor allem bei Pressen sehr kompliziert, da dieser Bereich im Inneren der Presse nur schwer zugänglich ist. Aus diesen Gründen verbietet sich der Einsatz derartiger Spindeltriebe in sogenannten Elektropressen dann, wenn diese Elektropressen im Dauereinsatz betrieben werden sollen.

Aus dem eingangs erwähnten Dokument DE 195 07 055 A1 ist eine Spindelpresse bekannt, die über eine Notschmierung verfügt. Hierzu ist eine Notschmierpumpe vorgesehen, die einer hydrostatischen Lagerung einer ununterbrochen umlaufenden Schwungscheibe zugeordnet ist. Bei Stromausfall erhält die Schwungscheibe den Betrieb der Notschmierpumpe und damit die Schmiermittelversorgung der hydrostatischen Lagerung aufrecht.

Aus dem Dokument US 2 557 822 A ist eine Schmierungsvorrichtung für eine Werkzeugmaschine bekannt, bei der ein Werkzeughalter auf einer Säule verschoben werden kann, um die Arbeitshöhe des Werkzeughalters zu ändern. Parallel zu Aufwärtsbewegungen des Werkzeughalters wird eine Zwangsschmierung der Gleitbewegung des Werkzeughalters auf der Säule ausgelöst.

Vor diesem Hintergrund ist es Aufgabe der vorliegenden Erfindung, das eingangs genannte Gerät derart weiterzubilden, daß auf konstruktiv einfache Weise ein Dauerbetrieb möglich und die Störanfälligkeit verringert wird, wobei insbesondere die Konstruktion der Schmierung weiter verbessert wird.

Bei dem eingangs erwähnten Gerät wird diese Aufgabe erfindungsgemäß dadurch gelöst, daß die Dosieranlage einen mit Schmiermittel befüllbaren Schmiermittelzylinder sowie einen in dessen Innenraum ragenden Befettungskolben umfaßt, der über die Antriebsvorrichtung betätigbar ist.

Die der Erfindung zugrunde liegende Aufgabe wird auf diese Weise vollkommen gelöst.

Die Erfinder der vorliegenden Anmeldung haben nämlich erkannt, daß es möglich ist, z.B. eine derartige Presse mit einer automatischen Dosieranlage zu versehen, die durch die Antriebsvorrichtung selbst betätigt werden kann. Diese Maßnahme ist insbesondere konstruktiv von Vorteil, weil die Schmierung nicht über einen zusätzlichen Antrieb oder eine zusätzliche Pneumatik/ Hydraulik erzielt wird, was den konstruktiven Aufwand, die Kosten und vor allem auch die Störanfälligkeit erhöhen würde. Wegen der zusätzlichen Überwachungsorgane für einen gesonderten Antrieb dieser Dosieranlage und des zusätzlichen Steueraufwandes würden sich bei einem gesonderten Antrieb die Kosten sowie die Störanfälligkeit noch weiter erhöhen.

Zwar erfordert die zusätzliche Dosieranlage in jedem Falle einen konstruktiv höheren Aufwand als er z.B. bei Pressen ohne Dosieranlage erforderlich ist, weil hier jedoch die übliche Antriebsvorrichtung, die schon für den Pressenstößel vorgesehen ist, auch zur Betätigung der Dosieranlage eingesetzt wird, kann die sowieso vorgesehene Steuerung für diese sogenannte Servoachse auch zur Steuerung der Schmierung bzw. Befettung eingesetzt werden, so daß für die Betätigung und die Steuerung der Dosieranlage keine zusätzlichen konstruktiven Maßnahmen erforderlich sind.

Bei der Erfindung ist von Vorteil, daß eine denkbar einfache Dosieranlage gewählt wird, der Befettungskolben muß lediglich über die Antriebsvorrichtung in den Schmiermittelzylinder hineingedrückt werden, wobei bei jedem Hineindrücken ein Teil des Schmiermittels an die entsprechenden Schmierstellen abgegeben wird. Die Betätigung des Befettungskolbens kann z.B. dadurch erfolgen, daß die Antriebsvorrichtung wahlweise über eine Kupplung mit einem Vorschubgetriebe für den Befettungskolben verbunden wird. Während eines normalen Arbeitshubes kann dann der Befettungskolben die Schmierung bewirken, sofern er an die Antriebsvorrichtung gekuppelt ist.

Allgemein ist es bevorzugt, wenn die Antriebsvorrichtung einen Spindeltrieb sowie einen Elektromotor zur Betätigung des Spindeltriebes umfaßt, wobei der Spindeltrieb vorzugsweise eine von dem Elektromotor angetriebene Gewindespindel, die axial unverschieblich gelagert ist, sowie eine über die Gewindespindel axial verschiebbare aber radial unverdrehbare Spindelmutter umfaßt, die mit dem betätigten Teil verbunden ist.

Diese Maßnahme ist konstruktiv von Vorteil, z.B. sind Pressen mit stehender Gewindespindel in der Regel einfacher aufgebaut als Pressen mit axial unverschieblicher Spindelmutter.

Ferner ist es bevorzugt, wenn der Befettungskolben in Abhängigkeit von der axialen Stellung des betätigten Teiles mit dem Spindeltrieb in Wirkverbindung ist.

Hier ist von Vorteil, daß das Einkuppeln sozusagen über das axiale Verstellen z.B. des Pressenstößels erfolgt, so daß also keine zusätzlichen Kupplungsorgane etc. erforderlich sind.

Weiterhin ist es bevorzugt, wenn der Befettungskolben mit der Spindelmutter in Anlage gelangt, wenn das betätigte Teil sich in einer axialen Stellung außerhalb seines Arbeitshubes befindet.

Hier ist von Vorteil, daß durch einfaches Verfahren der Spindelmutter und damit z.B. des Pressenstößels aus dem eigentlichen Bereich des Arbeitshubes heraus die Spindelmutter mit dem Befettungskolben in Anlage gelangt und diesen dann durch die Antriebsvorrichtung gesteuert stückweise in den Schmiermittelzylinder hineindrücken kann. Dies bedeutet jedoch, daß außer einem Befettungskolben, der z.B. über ein Keilgetriebe über die Spindelmutter betätigbar ist, keine größeren konstruktiven Änderungen z.B. an der Presse vorgenommen werden müssen.

Andererseits ist es bevorzugt, wenn der Schmiermittelzylinder konzentrisch zu der Gewindespindel auf der von dem Pressenstößel abgelegenen Seite der Spindelmutter vorgesehen und der Befettungskolben vorzugsweise konzentrisch zu der Gewindespindel zwischen dem Schmiermittelzylinder und der Spindelmutter angeordnet ist.

Auch diese Maßnahme ist konstruktiv von Vorteil, zwischen Befettungskolben und Spindelmutter ist kein weiteres Getriebe erforderlich. Zur Durchführung eines Schmiervorganges muß die Spindelmutter lediglich durch entsprechende Drehung der Gewindespindel so weit nach oben gefahren werden, daß sie mit dem Befettungskolben mittelbar oder unmittelbar in Anlage gelangt und diesen entsprechend weiter in den Schmiermittelzylinder hineindrückt.

Wenn der Schmiermittelzylinder sowie der Befettungskolben konzentrisch zu der Gewindespindel angeordnet werden, können diese oberhalb der Spindelmutter z.B. in dem den Pressenstößel führenden Rohr angeordnet werden, so daß auch keine großen Anforderungen an den Einbauraum für die Dosieranlage zu stellen sind.

Dabei ist es dann bevorzugt, wenn in dem Befettungskolben ein Schmiermittelkanal vorgesehen ist, der den Innenraum des Schmiermittelzylinders mit einer im Bereich der Gewindespindel mündenden Schmierbohrung in der Spindelmutter verbindet, wenn sich diese in Anlage mit dem Befettungskolben befindet.

Auch diese Maßnahme ist konstruktiv von Vorteil, es ist nämlich kein Schmiermittelschlauch oder ähnliches von dem Schmiermittelzylinder zu der Schmierstelle zu legen, vielmehr wird das Schmiermittel durch den Befettungskolben selbst nach unten geführt und gelangt über die Schmierbohrung in der Spindelmutter unmittelbar in den Gewindebereich zwischen Spindelmutter und Gewindespindel. Auch durch diese Maßnahme werden also die konstruktiven Anforderungen noch einmal deutlich reduziert.

Dabei ist es dann bevorzugt, wenn in dem Pressenstößel eine Abführbohrung für altes Schmiermittel vorgesehen ist, die unterhalb der Spindelmutter in einem Freiraum zwischen Spindelmutter, Gewindespindel und Pressenstößel mündet und diesen Freiraum mit einem Depot für altes Schmiermittel verbindet.

Auch diese Maßnahme ist konstruktiv von Vorteil, in dem Freiraum befindet sich nämlich sozusagen ein mitfahrendes Schmiermitteldepot, das beim Verfahren der Spindelmutter längs der Gewindespindel für eine ausreichende Schmierung im Gewindebereich sorgt und andererseits das alte Schmiermittel aufsammelt. Wird jetzt oberhalb dieses Freiraumes frisches Schmiermittel zwischen Gewindespindel und Spindelmutter gedrückt, so wird das alte Schmiermittel aus dem Freiraum heraus in das Depot gedrückt, wo es auf umweltfreundliche Weise entnommen und entsorgt werden kann.

Auch diese Maßnahme trägt besonders zur Erhöhung der Betriebssicherheit der neuen Presse bei, weil sich nämlich kein altes Fett an unzugänglichen Stellen der Presse ansammelt, wo es durch entsprechende Verhärtung zu Betriebsstörungen führen kann.

Weiterhin ist es bevorzugt, wenn die Abführbohrung in einer Tasche mündet, die an dem Pressenstößel an dessen in einem Rohrteil geführter Außenseite vorgesehen ist, wobei in dem Rohrteil eine Bohrung vorgesehen ist, die die Tasche mit dem Depot verbindet, wobei die Tasche vorzugsweise in axialer Richtung der Gewindespindel eine Ausdehnung aufweist, die etwa dem maximalen Hub des Befettungskolbens in dem Schmiermittelzylinder entspricht.

Hier ist von Vorteil, daß auf konstruktiv einfache Weise dafür gesorgt wird, daß in allen axialen Stellungen des Pressenstößels, in denen ein Schmiervorgang stattfindet, das alte Schmiermittel über die Tasche in das Depot entsorgt werden kann. Bei gefülltem Schmiermittelzylinder, wenn also der Befettungskolben in seiner axial unteren Lage liegt, ist die Bohrung in dem Rohrteil im oberen Bereich der Tasche angeordnet, wobei die Tasche dann von Schmiervorgang zu Schmiervorgang bezogen auf die Bohrung weiter nach oben wandert, bis die Bohrung sich schließlich am unteren Ende der Tasche befindet.

Die Größe des Schmiermittelzylinders kann übrigens ohne konstruktiv aufwendige Maßnahmen so gewählt werden, daß bei einem Betrieb von sechzehn Stunden täglich erst nach ca. drei Jahren das Schmiermittel in dem Schmiermittelzylinder wieder aufgefüllt werden muß. Die Erfinder der vorliegenden Anmeldung haben erkannt, daß durch die konzentrische Anordnung des Schmiermittelzylinders oberhalb der Spindelmutter aber innerhalb des den Pressenstößel führenden Rohrteiles so viel Raum zur Verfügung steht, daß in einer Art Depot diese Schmiermittelmenge untergebracht werden kann. Damit ist es aber nicht zwingend erforderlich, weitere, von außen zugängliche Schmierstellen zum Auffüllen des Schmiermittelzylinders vorzusehen, dieses Depot kann vielmehr während einer innerhalb von drei Jahren sowieso erforderlichen Wartung, zu deren Zwecken die Presse zerlegt werden muß, wieder aufgefüllt werden. Damit ergeben sich jedoch weitere konstruktive Vorteile, da - wie gesagt - auf die externe Auffüllmöglichkeit verzichtet werden kann. Andererseits kann dieses Depot natürlich auch durch einen Schmiernippel befüllbar sein, über den sowohl die anfängliche Schmiermittelmenge als auch später weiteres Schmiermittel zugeführt werden.

Allgemein ist es noch bevorzugt, wenn die Kassette so an einem Gehäuseteil des neuen Gerätes angeordnet ist, daß sie von außen vorzugsweise werkzeuglos entnehmbar ist.

Hier ist von Vorteil, daß auf konstruktiv denkbar einfache Weise für die Entsorgung des alten Schmiermittels Sorge getragen wird.

Schließlich ist es noch bevorzugt, wenn zwischen dem Schmiermittelkanal und der Schmierbohrung in der Spindelmutter ein O-Ring vorgesehen ist.

Hier ist von Vorteil, daß während des Schmiervorganges das Schmiermittel auch tatsächlich in die Schmierbohrung und von dort in den Gewindebereich zwischen Gewindespindel und Spindelmutter gelangt und nicht seitlich weggedrückt wird.

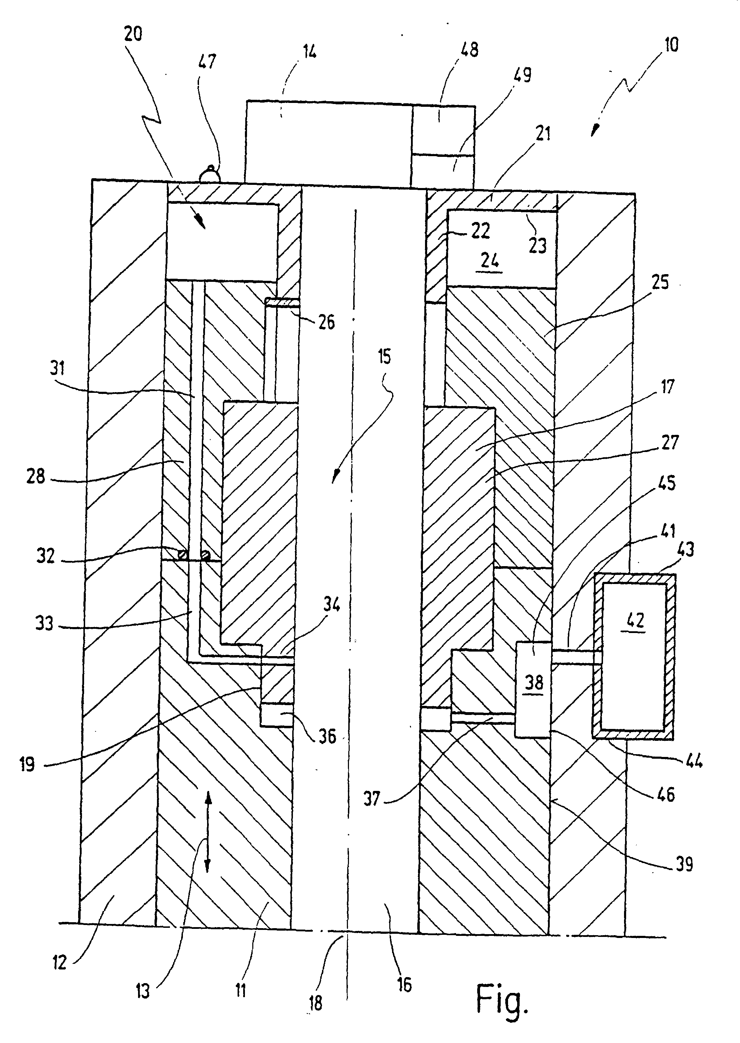

Ein Ausführungsbeispiel der Erfindung ist in der beigefügten Zeichnung dargestellt und wird in der nachfolgenden Beschreibung näher erläutert.

Die einzige Figur zeigt die erfindungsgemäße Presse in einem schematischen, ausschnittsweisen Längsschnitt.

In der Figur ist mit 10 allgemein als Beispiel für ein erfindungsgemäßes Gerät eine Elektropresse bezeichnet, die dort schematisch und ausschnittsweise im Längsschnitt dargestellt ist. Die Elektropresse 10 umfaßt einen Pressenstößel 11, der in einem Rohrteil 12 des nicht weiter dargestellten Gehäuses der Elektropresse geführt ist. Dieser Pressenstößel 11 führt einen bei 13 angedeuteten Arbeitshub aus, in dem sie Teile formt oder verfügt.

Der Pressenstößel 11 wird über eine Antriebsvorrichtung betätigt, die einen bei 14 angedeuteten Elektromotor sowie einen Spindeltrieb 15 umfaßt. Der Elektromotor 14 treibt eine axial unbeweglich gelagerte aber drehbare Gewindespindel 16 an, auf der längsverschieblich aber radial unverdrehbar eine Spindelmutter 17 sitzt. Durch Drehen der Gewindespindel 16 um ihre Drehachse 18 wird die Spindelmutter 17 längs der Drehachse 18 verschoben, wodurch der bei 19 auf die Spindelmutter aufgeschraubte Pressenstößel 11 den Hub 13 ausführt.

Zur Schmierung insbesondere des Gewindebereiches zwischen der Gewindespindel 16 und der Spindelmutter 17 ist eine bei 20 angedeutete Dosieranlage vorgesehen, die einen Schmiermittelzylinder 21 zur Aufnahme von Schmiermittel umfaßt. Der Schmiermittelzylinder 21 umfaßt ein die Gewindespindel 16 zentrisch umgebendes, röhrenförmiges Zylinderteil 22, an das sich nach oben ein Flansch 23 anschließt. Zylinderteil 22, Flansch 23 sowie Rohrteil 12 begrenzen so einen Innenraum 24, in dem sich das Schmiermittel befindet.

In diesen Innenraum 24 ragt ein Befettungskolben 25 hinein, der durch einen Anschlag 26 gegen Herausfallen gesichert ist. Der Befettungskolben 25 ist ebenfalls konzentrisch zu der Gewindespindel 16 angeordnet und wird innen an dem Rohrteil 12 geführt.

Von dem Schmiermittelzylinder 21 abgelegen weist der Befettungskolben 25 eine abgestufte Bohrung 27 auf, in die die Spindelmutter 17 derart hereinragt, daß eine Wandung 28 des Befettungskolbens 25 zwischen der Spindelmutter 17 und dem Rohrteil 12 liegt.

Diese Wandung 28 des Befettungskolbens 25 wird von einem parallel zu der Drehachse 18 verlaufenden Schmiermittelkanal 31 durchsetzt, der von dem Innenraum 24 ausgeht und im Bereich eines 0-Ringes 32 dort endet, wo der Befettungskolben 25 in der in der Figur gezeigten Stellung der Elektropresse 10 in Anlage mit dem Pressenstößel 11 ist.

In dem Pressenstößel 11 ist eine abgewinkelte Schmierbohrung 33 vorgesehen, die den Schmiermittelkanal 31 mit einer Schmierbohrung 34 verbindet, die die Spindelmutter 17 im Bereich der Verschraubung 19 radial durchsetzt und im Bereich des Gewindes zwischen Gewindespindel 16 und Spindelmutter 17 mündet.

Selbstverständlich ist es auch möglich, den Befettungskolben 25 ohne die abgestufte Bohrung 27 und Wandung 28 auszubilden, so daß der Schmiermittelkanal 31 dann unmittelbar an der dem Befettungskolben 25 zugewandten Stirnseite der Spindelmutter 17 endet, in der dann eine abgewinkelte Schmierbohrung vorgesehen ist. Mit anderen Worten, es ist nicht erforderlich, den Schmiermittelkanal 31 über die Schmierbohrung 33 in dem Pressenstößel 11 mit der Schmierbohrung 34 in der Spindelmutter 17 zu verbinden. Es ist also möglich, auf die Schmierbohrung 33 zu verzichten bzw. diese unmittelbar in der Spindelmutter 17 vorzusehen. Dazu ist es jedoch erforderlich, größere Manipulationen an der Spindelmutter 17 vorzusehen, was in der Regel unerwünscht ist und durch die geschilderte Ausbildung des Befettungskolbens 25 sowie die Schmierbohrung 33 in dem Pressenstößel 11 vermieden wird. Ferner wird der Befettungskolben 25 so sicher auf der Spindelmutter 17 geführt und kann nicht verkanten.

Unterhalb der Spindelmutter 17 ist zwischen dieser, dem Pressenstößel 11 sowie der Gewindespindel 16 ein Freiraum 36 vorgesehen, der sich zu der Gewindespindel 16 hin öffnet. Dieser Freiraum 16 ist über eine Abführbohrung 37 mit einer Tasche 38 verbunden, die an dem Pressenstößel 11 an dessen Außenseite 39 vorgesehen ist, über die er in dem Rohrteil 12 geführt wird.

Die Tasche 38 wiederum ist durch eine in dem Rohrteil 12 vorgesehene Bohrung 41 mit einem Depot 42 für altes Schmiermittel verbunden. Dieses Depot 42 ist als herausnehmbare Kassette 43 ausgebildet, die von außen in eine entsprechende Ausnehmung 44 in dem Rohrteil 12 angesetzt ist und ohne Werkzeug ausgewechselt werden kann.

Im Betrieb der insoweit beschriebenen Elektropresse 10 befindet sich die Spindelmutter 17 im Abstand zu dem Befettungskolben 25, so daß während eines Arbeitshubes 13 der Befettungskolben 25 nicht bewegt wird. Soll jetzt ein Schmiervorgang initiiert werden, dann wird durch entsprechendes Verdrehen der Gewindespindel 16 die Spindelmutter 17 in die in der Figur gezeigte Stellung gefahren, wo entweder die Spindelmutter 17 oder aber der Pressenstößel 11 in Anlage mit dem Befettungskolben 25 sind.

Durch einen weiteren Hub der Spindelmutter 17 in der Figur nach oben auf den Elektromotor 14 zu wird jetzt der Befettungskolben 25 weiter in den Innenraum 24 hineingefahren, wodurch Schmiermittel durch den Schmiermittelkanal 31 und die Schmierbohrungen 33, 34 in den Gewindebereich zwischen Gewindespindel 16 und Spindelmutter 17 gelangt. Dieses Schmiermittel verdrängt Schmiermittel, das sich in dem Freiraum 36 angesammelt hat und drückt dieses durch die Abführbohrung 37 in die Tasche 38. Wird weiteres Schmiermittel nachgeführt, so wird die Tasche 38 über die Bohrung 41 in das Depot 42 entleert, das durch Herausnehmen der Kassette 43 gereinigt werden kann.

In dem Freiraum 36 befindet sich jetzt frisches Schmiermittel, so daß beim weiteren Betrieb der Elektropresse 10 sozusagen ein mitfahrendes Schmiermitteldepot für eine dauerhafte Schmierung zwischen Gewindespindel 16 und Spindelmutter 17 sorgt. Das alte Schmiermittel sammelt sich dabei wieder in dem Freiraum 36 und wird auf die oben beschriebene Weise nach einer vorgegebenen Anzahl von Arbeitshüben durch neues Schmiermittel ersetzt.

Bei jedem Schmiervorgang gelangt der Befettungskolben 25 etwas weiter in den Innenraum 24 hinein, so daß die Tasche 38 sich bei jedem Schmiervorgang etwas weiter oben befindet. In der in der Figur gezeigten Stellung liegt die Tasche noch mit ihrem oberen Ende 45 im Bereich der Bohrung 41, weil hier angenommen wurde, daß der Innenraum 24 vollständig mit Schmiermittel gefüllt ist. Während der Lebenszeit der Elektropresse 10 wandert jetzt bei einem Schmiervorgang die Tasche 38 immer weiter nach oben, bis sie schließlich mit ihrem unteren Ende 46 im Bereich der Bohrung 41 ist. Die Tasche 38 weist in Richtung der Drehachse 18 eine Ausdehnung auf, die dem maximalen Hub des Befettungskolbens 25 in dem Schmiermittelzylinder 21 entspricht.

Während eines Arbeitshubes 13 der Elektropresse 10 ist die Tasche 38 übrigens durch die Innenwand des Rohrteiles 12 abgedichtet, so daß dort befindliches altes Schmiermittel nicht anderweitig entweichen kann. Da es sich bei dem Schmiermittel in der Regel um Fett handelt, kann auch in dem Depot 42 befindliches Schmiermittel nicht ohne weiteres durch die Bohrung 41 wieder zurück in das Innere der Elektropresse 10 gelangen.

Links neben dem Elektromotor 14 ist noch ein Schmiernippel 47 zu erkennen, über den der Innenraum 24 der Dosieranlage 20 mit Schmiermittel befüllbar ist. Nachdem die Elektropresse 10 fertig montiert worden ist, wird über diesen Schmiernippel 47 so lange Schmiermittel in den Innenraum 24 eingepreßt, bis sich dieses über den Schmiermittelkanal 31 sowie die Schmierbohrungen 33, 34 und die Abführbohrung 37 in die Tasche 38 und von dort über die Bohrung 41 in das Depot 42 ausgebreitet hat. Mit anderen Worten, an dem Schmiernippel 47 wird so lange Schmiermittel zugeführt, bis es aus der Bohrung 41 wieder austritt.

Auf gleiche Weise kann auch nach längerem Betrieb der Elektropresse 10 das gesamte Schmiermittel ausgetauscht werden. Dazu wird wieder über den Schmiernippel 47 so lange frisches Schmiermittel zugeführt, bis sich das gesamte alte Schmiermittel in dem Depot 42 gesammelt hat.

Die Steuerung nicht nur der Elektropresse 10 sondern auch der Dosieranlage 20 erfolgt über eine bei 48 angedeutete Steuerung, die unter anderem ein bei 49 angedeutetes Weg- und Kraftmeßsystem umfaßt. Über die Steuerung 48 sowie das Weg- und Kraftmeßsystem 49 kann die Spindelmutter 17 und damit der Pressenstößel 11 definiert verfahren werden, wobei deren genaue axiale Lage der Steuerung 48 jederzeit über das Weg- und Kraftmeßsystem 49 gemeldet wird.

Die Steuerung 48 ermöglicht es jetzt auch, daß die Betätigung der Dosieranlage 20 anhand konkreter Betriebszustände der Elektropresse 10 erfolgt. Die Steuerung 48 erfaßt dazu die Belastungen, also die Zahl der Arbeitshübe, die jeweilige Hublänge, die Hubgeschwindigkeit sowie die aufgewendete Kraft, integriert diese Betriebszustände dann auf und initiiert nach den Herstellerangaben des Spindeltriebes dann eine Schmierung. Dabei kann die Dosieranlage 20 präzise und bedarfsabhängig betätigt werden.

Die Steuerung 48 speichert dazu die axiale Stellung der Spindelmutter 17 am Ende eines Dosiervorganges und fährt diese Stelle präzise wieder an, wenn eine neue Schmierung erforderlich ist. Über den Elektromotor 14 läßt sich die Menge des abgegebenen Schmiermittels darüber hinaus exakt dosieren.

Abschließend sei noch erwähnt, daß die Dosieranlage 20 keine gesonderte Betätigungsvorrichtung erfordert, vielmehr wird durch die Steuerung 48, die den Elektromotor 14 schon zur Durchführung des Arbeitshubes ansteuert, auch der Schmiervorgang bewirkt. Verglichen mit einer Elektropresse 10 ohne Dosieranlage 20 sind lediglich zusätzlich der Schmiermittelzylinder 21 sowei der Befettungskolben 25 vorzusehen, wobei weiterhin noch die Schmierbohrungen 33 und 34 anzubringen sind und z.B. durch eine entsprechende Unterlegscheibe beim Verschrauben des Pressenstößels 11 mit der Spindelmutter 17 für den Freiraum 36 zu sorgen ist. Auf die Abführbohrung 37, die Tasche 38, die Bohrung 41 sowie das Depot 42 kann verzichtet werden, wenn in Kauf genommen werden kann, daß sich das alte Schmiermittel undefiniert in der Elektropresse 10 verteilt und ansammelt.

## Patentansprüche

1. Gerät mit einem über eine Antriebsvorrichtung (14, 15) betätigten Teil, vorzugsweise Handhabungsgerät mit einem betätigten Positionierteil oder Presse (10) mit einem von der Antriebsvorrichtung (14, 15) betätigten Pressenstößel (11), wobei zur Schmierung zumindest der Antriebsvorrichtung (14, 15) eine Dosieranlage (20) vorgesehen ist, die durch die Antriebsvorrichtung (14, 15) betätigbar ist, **dadurch gekennzeichnet, daß** die Dosieranlage (20) einen mit Schmiermittel befüllbaren Schmiermittelzylinder (21) sowie einen in dessen Innenraum (24) ragenden Befettungskolben (25) zum Ausdrücken des Schmiermittels umfaßt, der über die Antriebsvorrichtung (14, 15) betätigbar ist.

2. Gerät nach Anspruch 1, **dadurch gekennzeichnet, daß** die Antriebsvorrichtung (14, 15) einen Spindeltrieb (15) sowie einen Elektromotor (14) zur Betätigung des Spindeltriebes (15) umfaßt.

3. Gerät nach Anspruch 2, **dadurch gekennzeichnet, daß** der Spindeltrieb (15) eine von dem Elektromotor (14) angetriebene Gewindespindel (16), die axial unverschieblich gelagert ist, sowie eine über die Gewindespindel (16) axial verschiebbare, aber radial unverdrehbare Spindelmutter (17) umfaßt, die mit dem betätigten Teil verbunden ist.

4. Gerät nach Anspruch 2 oder 3, **dadurch gekennzeichnet, daß** der Befettungskolben (25) in Abhängigkeit von der axialen Stellung des betätigten Teiles mit dem Spindeltrieb (15) in Wirkverbindung ist.

5. Gerät nach Anspruch 3 oder 4, **dadurch gekennzeichnet, daß** der Befettungskolben (25) mit der Spindelmutter (17) in Anlage gelangt, wenn sich das betätigte Teil in einer axialen Stellung außerhalb seines Arbeitshubes (13) befindet.

6. Gerät nach einem der Ansprüche 3 bis 5, **dadurch gekennzeichnet, daß** das bewegte Teil ein Pressenstößel (11) ist, daß der Schmiermittelzylinder (21) konzentrisch zu der Gewindespindel (16) auf der von dem Pressenstößel (11) abgelegenen Seite der Spindelmutter (17) vorgesehen und daß der Befettungskolben (25) konzentrisch zu der Gewindespindel (16) zwischen dem Schmiermittelzylinder (21) und der Spindelmutter (17) angeordnet ist.

7. Gerät nach Anspruch 6, **dadurch gekennzeichnet, daß** in dem Befettungskolben (25) ein Schmiermittelkanal (31) vorgesehen ist, der den Innenraum (24) des Schmiermittelzylinders (21) mit einer im Bereich der Gewindespindel (16) mündenden Schmierbohrung (34) in der Spindelmutter (17) verbindet, wenn sich diese mittelbar oder unmittelbar in Anlage mit dem Befettungskolben (25) befindet.

8. Gerät nach Anspruch 7, **dadurch gekennzeichnet, daß** in dem Pressenstößel (11) eine Abführbohrung (37) für altes Schmiermittel vorgesehen ist, die unterhalb der Spindelmutter in einen Freiraum (36) zwischen Spindelmutter (17), Gewindespindel (16) und Pressenstößel (11) mündet und diesen Freiraum (36) mit einem Depot (42) für altes Schmiermittel verbindet.

9. Gerät nach Anspruch 8, **dadurch gekennzeichnet, daß** die Abführbohrung (37) in einer Tasche (38) mündet, die an dem Pressenstößel (11) an dessen in einem Rohrteil (12) geführte Außenseite (39) vorgesehen ist, wobei in dem Rohrteil (12) eine Bohrung (41) vorgesehen ist, die die Tasche (38) mit dem Depot (42) verbindet.

10. Gerät nach Anspruch 9, **dadurch gekennzeichnet, daß** die Tasche (38) in axialer Richtung der Gewindespindel (16) eine Ausdehnung aufweist, die dem maximalen Hub des Befettungskolbens (25) in dem Schmiermittelzylinder (21) entspricht.

11. Gerät nach einem der Ansprüche 8 bis 10, **dadurch gekennzeichnet, daß** das Depot (42) eine auswechselbare Kassette (43) ist, die von außen zugänglich an dem Gerät befestigt ist.

12. Gerät nach einem der Ansprüche 7 bis 11, **dadurch gekennzeichnet, daß** zwischen dem Schmiermittelkanal (31) und der Schmierbohrung (34) ein O-Ring (32) vorgesehen ist, der im Schmierbetrieb für eine Abdichtung zwischen Schmiermittelkanal (31) und Schmierbohrung (34) sorgt.

## Claims

1. An apparatus having an element actuated by means of a drive unit (14, 15), preferably a handling apparatus having a positioning element, or a press (10) having a press ram actuated by the drive unit (14, 15), wherein a dosing device (20) is provided for lubricating at least the drive unit (14), the dosing device (20) being adapted to be actuated by the drive unit (14, 15), **characterized in that** the dosing device (20) comprises a lubricant cylinder (21) adapted to be filled with a lubricant, as well as a greasing piston (25) extending into the inner space (24) thereof for dispensing the lubricant, the greasing piston (25) being adapted to be actuated by the drive unit (14, 15).

2. The apparatus of claim 1, **characterized in that** the drive unit (14, 15) comprises a spindle drive (15) as well as an electric motor (14) for actuating the spindle drive (15).

3. The apparatus of claim 2, **characterized in that** the spindle drive (15) comprises a threaded spindle (16) driven by the electric motor (14), the threaded spindle (16) being journalled axially non-displaceable, and a spindle nut (17) being axially displaceable via the threaded spindle (16) but being radially non-rotatable, the spindle nut (17) being connected to the actuated element.

4. The apparatus of claim 2 or 3, **characterized in that** the greasing piston (25) is in working cooperation with the spindle drive (15) as a function of the axial position of the actuated element.

5. The apparatus of claim 3 or 4, **characterized in that** the greasing piston (25) comes into contact with the spindle nut (17), when the actuated element is in an axial position outside its working stroke (13).

6. The apparatus of any of claims 3 to 5, **characterized in that** the displaced element is a press ram (11), that the lubricant cylinder (21) is provided concentrically relative to the threaded spindle (16) on the side of the spindle nut (17) opposite the press ram (11), and that the greasing piston (25) is arranged concentrically relative to the threaded spindle (16) between the lubricant cylinder (21) and the spindle nut (17).

7. The apparatus of claim 6, **characterized in that** a lubricant channel (31) is provided in the greasing piston (25), the lubricant channel (31) interconnecting the interior space (24) of the lubricant cylinder (21) with a lubricant bore (34) within the spindle nut (17) opening in the area of the threaded spindle (16), when the spindle nut (17) directly or indirectly is in contact with the greasing piston (25).

8. The apparatus of claim 7, **characterized in that** a discharge bore (37) for used lubricant is provided within the press ram (11), the discharge bore (37) opening below the spindle nut (17) into a free space (36) between the spindle nut (17), the threaded spindle (16) and the press ram (11), and interconnecting the free space (26) with a reservoir (42) for used lubricant.

9. The apparatus of claim 8, **characterized in that** the discharge bore (37) opens into a pocket (38), the pocket (38) being provided on an exterior side (39) of the press ram (11), the exterior side (39) being guided within a tube section (12), wherein a bore (41) is provided in the tube section (12) interconnecting the pocket (38) with the reservoir (42).

10. The apparatus of claim 9, **characterized in that** the pocket (38) has an extension in the axial direction of the threaded spindle (16) corresponding to the maximum stroke of the greasing piston (25) within the lubricant cylinder (21).

11. The apparatus of any of claims 8 to 10, **characterized in that** the reservoir (42) is an interchangeable cassette (43) being attached to the apparatus externally accessible.

12. The apparatus of any of claims 7 to 11, **characterized in that** an O-ring (32) is provided between the lubricant channel (31) and the lubricant bore (34), the O-ring (32) effecting a sealing between the lubricant channel (31) and the lubricant bore (34) in the lubrification mode.

## Revendications

1. Appareil comportant un élément actionné au moyen d'un dispositif d'entraînement (14, 15), de préférence appareil de manipulation comportant un élément de positionnement actionné ou presse (10) avec un piston de presse (11) actionné par le dispositif d'entraînement (14, 15), une installation de dosage (20), qui peut être actionnée au moyen du dispositif d'entraînement (14, 15), étant prévue pour la lubrification d'au moins le dispositif d'entraînement (14, 15), **caractérisé en ce que** l'installation de dosage (20) comprend un cylindre de lubrifiant (21) qui peut être rempli avec un lubrifiant, ainsi qu'un piston de graissage (25) pénétrant dans son volume intérieur (24), pour refouler le lubrifiant, et qui peut être actionné au moyen du dispositif d'entraînement (14, 15).

2. Appareil selon la revendication 1, **caractérisé en ce que** le dispositif d'entraînement (14, 15) comprend un mécanisme à vis (15) ainsi qu'un moteur électrique (14) pour l'actionnement du mécanisme à vis (15).

3. Appareil selon la revendication 2, **caractérisé en ce que** le mécanisme à vis (15) comprend une tige filetée (16) entraînée par le moteur électrique (14) et qui est montée de manière à ne pouvoir coulisser axialement, ainsi qu'un écrou de vis (17) qui peut coulisser axialement sur la tige filetée (16), mais qui ne peut tourner radialement et qui est reliée à l'élément actionné.

4. Appareil selon la revendication 2 ou 3, **caractérisé en ce que** le piston de graissage (25) est en liaison active avec le mécanisme à vis (15) en fonction de la position axiale de l'élément actionné.

5. Appareil selon la revendication 3 ou 4, **caractérisé en ce que** le piston de graissage (25) vient en contact avec l'écrou de vis (17) lorsque l'élément actionné se trouve dans une position axiale extérieure à sa course de travail (13).

6. Appareil selon l'une des revendications 3 à 5, **caractérisé en ce que** l'élément déplacé est un piston de presse (11), **en ce que** le cylindre de lubrifiant (21) est prévu concentriquement à la tige filetée (16), sur le côté de l'écrou de vis (17) opposé au piston de presse (11), et **en ce que** le piston de graissage (25) est disposé concentriquement à la tige filetée (16), entre le cylindre de lubrifiant (21) et l'écrou de vis (17).

7. Appareil selon la revendication 6, **caractérisé en ce que** dans le piston de graissage (25) est prévu un canal de lubrifiant (31) qui relie le volume intérieur (24) du cylindre de lubrifiant (21) à un perçage de lubrification (34) de l'écrou de vis (17), débouchant dans la zone de la tige filetée (16), lorsque celui-ci se trouve directement ou indirectement en contact avec le piston de graissage (25).

8. Appareil selon la revendication 7, **caractérisé en ce que** dans le piston de presse (11) est prévu un perçage d'évacuation (37) pour le lubrifiant usé, qui débouche au-dessous de l'écrou de vis, dans un espace libre (36) entre l'écrou de vis (17), la tige filetée (16) et le piston de presse (11), et qui relie cet espace libre (36) à un réceptacle (42) de lubrifiant usé.

9. Appareil selon la revendication 8, **caractérisé en ce que** le perçage d'évacuation (37) débouche dans une poche (38) qui est prévue sur le piston de presse (11), sur son côté extérieur (39) passant dans un élément tubulaire (12), un perçage (41), qui relie la poche (38) au réceptacle (42), étant prévu dans l'élément tubulaire (12).

10. Appareil selon la revendication 9, **caractérisé en ce que** la poche (38) présente, dans la direction axiale de la tige filetée (16), une étendue qui correspond à la course maximale du piston de graissage (25) dans le cylindre de lubrifiant (21).

11. Appareil selon l'une des revendications 8 à 10, **caractérisé en ce que** le réceptacle (42) est une cassette (43) échangeable qui est fixée à l'appareil, de manière accessible de l'extérieur.

12. Appareil selon l'une des revendications 7 à 11, **caractérisé en ce qu'**un joint torique (32), qui en mode de lubrification assure une étanchéité entre le canal de lubrifiant (31) et le perçage de lubrification (34), est prévu entre le canal de lubrifiant (31) et le perçage de lubrification (34).
